Europäisches Patentamt

European Patent Office

Office européen des brevets

(19)

(11) Veröffentlichungsnummer: **0 118 622**
**B1**

(12) **EUROPÄISCHE PATENTSCHRIFT**

(45) Veröffentlichungstag der Patentschrift:
**10.12.86**

(51) Int. Cl.⁴: **H 04 N 5/64,** A 47 B 96/20

(21) Anmeldenummer: **83113051.3**

(22) Anmeldetag: **23.12.83**

(54) **Gehäuse für ein Fernsehgerät.**

(30) Priorität: **05.03.83 DE 3307891**

(43) Veröffentlichungstag der Anmeldung:
**19.09.84 Patentblatt 84/38**

(45) Bekanntmachung des Hinweises auf die Patenterteilung:
**10.12.86 Patentblatt 86/50**

(84) Benannte Vertragsstaaten:
**FR GB IT**

(56) Entgegenhaltungen:
**EP - A - 0 077 647**
**AU - B - 500 835**

(73) Patentinhaber: **Blaupunkt-Werke GmbH,**
**Robert-Bosch-Strasse 200, D-3200 Hildesheim (DE)**

(72) Erfinder: **Maassberg, Albert, Grotefendweg 12,**
**D-3200 Hildesheim (DE)**
Erfinder: **Graf, Peter-J., Dipl.-Ing., Franz-Eger-Strasse 5,**
**D-3200 Hildesheim (DE)**

(74) Vertreter: **Eilers, Norbert, Dipl.-Phys., Blaupunkt-Werke**
**GmbH Robert-Bosch-Strasse 200, D-3200 Hildesheim**
**(DE)**

ACTORUM AG

# Beschreibung

## Stand der Technik

Die Erfindung geht aus von einem Gehäuse nach der Gattung des Hauptanspruchs. Ein solches Gehäuse ist beispielsweise bekannt durch die DE-B-2 522 627. Wenn auf ein solches Gehäuse eine Frontwand aufgesetzt werden sollte, so war es bisher üblich, diese mit Heftklammern oder sonstigen, besonderen Halteelementen am Gehäuse zu befestigen. Abgesehen von dem damit verbundenen materiellen Aufwand, war für die Befestigung der Frontwand ein erheblicher Arbeitsaufwand notwendig, was zu hohen Fertigungskosten führte.

## Vorteile der Erfindung

Das erfindungsgemässe Gehäuse mit den kennzeichnenden Merkmalen des Hauptanspruchs hat demgegenüber den Vorteil, dass keine separaten Befestigungsmittel notwendig sind, um die Frontwand am Gehäuse zu befestigen. Durch die besondere Ausbildung ohnehin vorhandener Teile sind hierfür keine besonderen Befestigungsmittel notwendig und ist eine kostengünstige Montage möglich.

Durch die in den Unteransprüchen aufgeführten Massnahmen sind vorteilhafte Weiterbildungen und Verbesserungen des im Hauptanspruch angegebenen Gehäuses möglich. Besonders vorteilhaft ist es im Sinne einer kostengünstigen Herstellung des Gehäuses, dass die Füllkörper für die hohlkehlenartigen Ausnehmungen aus PU-Hartschaum bestehen, der durch Verschäumen in diese eingebracht wurde.

## Zeichnung

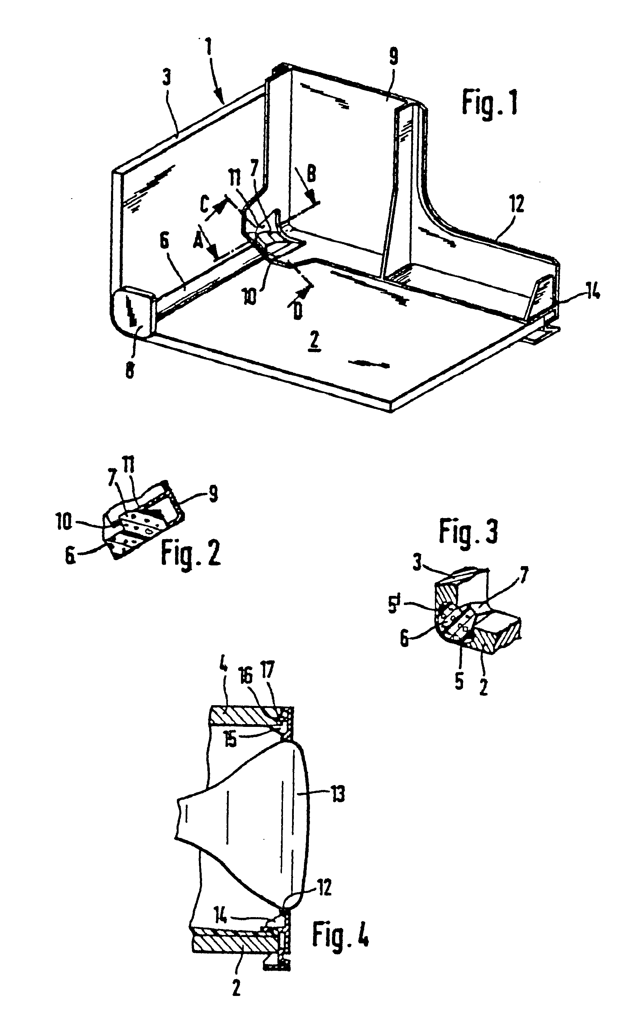

Ein Ausführungsbeispiel ist in der Zeichnung dargestellt und in der nachfolgenden Beschreibung näher erläutert. Es zeigen Fig. 1 einen Ausschnitt aus einem Gehäuse nach der Erfindung in perspektivischer Darstellung, Fig. 2 einen Schnitt A-B nach Fig. 1, Fig. 3 einen Schnitt C-D nach Fig. 1 in perspektivischer Darstellung und Fig. 4 eine Seitenansicht des Gehäuses im Schnitt.

## Beschreibung des Ausführungsbeispiels

Das Gehäuse 1 besteht zunächst aus vier Gehäusewänden, von denen in der Zeichnung die Gehäusewände 2, 3 und 4 erkennbar sind. Die Gehäusewand 2 dient als Gehäuseboden und die Gehäusewand 4 als Gehäusedecke. Nach vorne ist das Gehäuse 1 durch die Gehäusefrontwand 9 und nach hinten durch eine in der Zeichnung nicht gezeigte Rückwand abgeschlossen. In den Bereichen der Gehäuseecken haben die Gehäusewände hohlkehlenartige Ausnehmungen 5, 5', wie dies in Fig. 3 im Zusammenhang mit den Gehäusewänden 2 und 3 gezeigt ist. Diese Ausnehmungen 5, 5' bewirken — sofern es sich um eine einstückige Ausbildung der Gehäusewände handelt — in den Deckenbereichen eine so weitgehende Materialschwächung, dass eine elastische Verbindung zwischen den Gehäusewänden, z.B. 2 und 3, entsteht, die es erlaubt, z.B. die Gehäusewand 3 zur Gehäusewand 2 in eine vorbestimmte Winkellage zu schwenken. Dabei entsteht eine sogenannte abgerundete Ecke. In gleicher Weise sind die jeweiligen Verbindungsstellen zwischen den anderen Gehäusewänden ausgebildet. Selbstverständlich ist es auch denkbar, das Gehäuse in bekannter Weise aus sich aneinander anschliessenden Platten zu bilden, welche mit einer Kunststofffolie überzogen sind, die auf der Aussenseite des Gehäuses unterbrechungslos von einer Platte zur anderen übergeht. In beiden Fällen nehmen die Ausnehmungen 5, 5' zum Zwecke der Stabilitätserhöhung Füllkörper 6 in sich auf, die im gezeigten Ausführungsbeispiel aus PU-Hartschaum bestehen, der durch Verschäumen in die Ausnehmungen 5, 5' eingebracht ist. Selbstverständlich können die Füllkörper auch in bekannter Weise aus vorgefertigen Formkörpern, wie beispielsweise rohrförmigen Rundprofilen bestehen.

Die Füllkörper 6 weisen Rastnasen 7 auf, die zusammen mit den Füllkörpern in einem Arbeitsgang geschäumt werden. Diese Rastnasen 7 sind für die Zusammenarbeit mit Rastlappen 10 bestimmt, die an der Gehäusefrontwand 9 befestigt oder ausgebildet sind. An der rückwärtigen Seite des Gehäuses 1 sind die Füllkörper 6 als Schaumecken 8 ausgebildet, die zur Befestigung der nicht dargestellten Gehäuserückwand, beispielsweise mittels Riegeln, dienen.

Wenn die Gehäusefrontwand 9 auf das Gehäuse 1 aufgesetzt wird, gleiten die Rastlappen 10 über die Rastnasen 7 hinweg und weichen dabei federnd aus. Die Rastnasen 7 sind so positioniert, dass die Rastlappen 10 mit ihren Durchbrechungen 11 dann hinter ihnen einschnappen, wenn die Gehäusefrontwand 9 ihre Sollstellung erreicht hat. Dabei greift eine federartige Leiste 16 in eine in der Gehäusewand 4 befindliche Nut 17 ein und hält somit die Gehäusefrontwand 9 flächenbündig zur Gehäusewand 4. Stützrippen 14, 15 sorgen für die notwendige Stabilität der Gehäusefrontwand 9, die das in der Fensteröffnung 12 gehaltene Bildrohr 13 trägt. Die geschäumten Rastnasen 7 haben nur Haltefunktion nach vorn, d.h., sie haben nur dafür zu sorgen, dass die Gehäusefrontwand 9 gegen eine Bewegung nach vorn gesichert ist. Damit unterliegen die Rastnasen 7 einer äusserst geringen Belastung.

## Patentansprüche

1. Gehäuse (1) für ein Fernsehgerät, das aus miteinander verbundenen Gehäusewänden (2, 3, 4), einer aufsetzbaren Gehäusefronwand (9) und einer aufsetzbaren Gehäuserückwand besteht, wobei die Gehäusewände (2, 3, 4) in den Bereichen der Gehäuseecken hohlkehlenartige Ausnehmungen (5, 5') aufweisen, die Füllkörper (6) in sich aufnehmen, dadurch gekennzeichnet, dass die Füllkörper (6) Rastnasen (7) aufweisen, die mit an der Gehäusefrontwand (9) befindlichen Rastlappen (11) zusammenwirken.

2. Gehäuse nach Anspruch 1, dadurch gekennzeichnet, dass die Gehäusefrontwand (9) und die an ihr befindlichen Rastlappen (11) einstückig ausgebildet sind.

3. Gehäuse nach einem der Ansprüche 1 oder 2, dadurch gekennzeichnet, dass die Gehäusefrontwand (9) Stützrippen (15) hat, die sich bei aufgesetzter Gehäusefrontwand (9) gegen die Innenseiten der Gehäusewände abstützen und die Gehäusefrontwand (9) im Gehäuse (1) halten.

4. Gehäuse nach einem der Ansprüche 1 bis 3, dadurch gekennzeichnet, dass an mindestens einer der Längsseiten der Gehäusefrontwand (9) eine federartige, dem Gehäuse (1) zugewandte Leiste (6) angebracht ist, die bei an das Gehäuse (1) angesetzter Gehäusefrontwand (9) in eine in der Stirnseite der betreffenden Gehäusewand (4) befindliche Nut (17) eingreift und somit die Gehäusefrontwand (9) flächenbündig zur Gehäusewand (4) hält.

5. Gehäuse nach einem der Ansprüche 1 bis 4, dadurch gekennzeichnet, dass die Füllkörper (6) für die hohlkehlenartigen Ausnehmungen (5, 5′) aus PU-Hartschaum bestehen, der durch Verschäumen in diese eingebracht ist.

6. Gehäuse nach einem der Ansprüche 1 bis 5, dadurch gekennzeichnet, dass die Füllkörper (6) und die Rastnasen (7) einstückig ausgebildet sind.

7. Gehäuse nach Anspruch 5, dadurch gekennzeichnet, dass die Rastnasen (7) zusammen mit den Füllkörpern (6) geschäumt sind.

### Claims

1. Housing (1) for a television set, which consists of housing panels (2, 3, 4) connected to one another, a mountable housing front panel (9) and a mountable housing rear panel, the housing panels (2, 3, 4) having in the regions of the housing corners fillet-like recesses (5, 5′) which receive packing elements (6), characterized in that the packing elements (6) have lugs (7) which interact with the tabs (11) located on the housing front panel (9).

2. Housing according to claim 1, characterized in that the housing front panel (9) and the tabs (11) located on it are of integral design.

3. Housing according to one of claims 1 or 2, characterized in that the housing front panel (9) has support ribs (15) which, when the housing front panel (9) is mounted, are supported by the insides of the housing panels and hold the housing front panel (9) in the housing (1).

4. Housing according to one of claims 1 to 3, characterized in that on at least one of the longitudinal sides of the housing front panel (9) is arranged a spring-like strip (16) which faces the housing (1) and, when the housing front panel (9) is fitted on the housing (1), engages in a groove (17) located in the face of the housing panel (4) concerned and thus holds the housing front panel (9) flush with the housing panel (4).

5. Housing according to one of claims 1 to 4, characterized in that the packing elements (6) for the fillet recesses (5, 5′) consist of rigid expanded polyurethane which is introduced into the recesses by foaming.

6. Housing according to one of claims 1 to 5, characterized in that the packing elements (6) and the lugs (7) are of integral design.

7. Housing according to claim 5, characterized in that the lugs (7) are foamed together with the packing elements (6).

### Revendications

1. Boîtier (1) pour récepteur de télévision, constitué de parois (2, 3, 4) reliées l'une à l'autre, d'une paroi avant à poser (9) et une paroi arrière à poser, étant précisé que les parois (2, 3, 4) présentent dans les zones des angles du boîtier, des évidements (5, 5′) en forme de congé dans lesquels se logent les éléments de remplissage (6), caractérisé en ce que les éléments de remplissage (6) présentent des talons de crantage (7) qui collaborent avec des pattes de crantage (11) qui se trouvent sur la paroi avant du boîtier (9).

2. Boîtier selon revendication 1, caractérisé en ce que la paroi avant du boîtier (9) et les pattes de crantage (11) qui s'y trouvent sont conçus d'une pièce.

3. Boîtier selon l'une des revendications 1 ou 2, caractérisé en ce que la paroi avant du boîtier (9) présente des nervures de maintien (15) qui, lorsque la paroi avant du boîtier (9) est posée, s'appuient contre les faces intérieures des parois du boîtier et maintiennent la paroi avant (9) dans le boîtier (1).

4. Boîtier selon l'une des revendications 1 à 3, caractérisé en ce que, sur au moins l'un des bords longitudinaux de la paroi avant du boîtier (9), est rapportée une languette élastique (16) qui est tournée vers le boîtier (1), qui, lorsque la paroi avant (9) du boîtier est posée contre le boîtier (1), se loge dans une rainure (17) qui se trouve sur la face frontale de la paroi correspondante du boîtier (4) et maintient ainsi la paroi avant du boîtier (9) affleurante à la paroi du boîtier (4).

5. Boîtier selon l'une des revendications 1 à 4, caractérisé en ce que les éléments de remplissage (6) pour les évidements (5, 5′) en forme de congé sont constitués de mousse dure de polyuréthane que l'on y rapporte par formation de mousse.

6. Boîtier selon l'une des revendications 1 à 5, caractérisé en ce que les éléments de remplissage (6) et les talons de crantage (7) sont conçus d'une pièce.

7. Boîtier selon la revendication 5, caractérisé en ce que les talons de crantage (7) sont obtenus par formation de mousse en même temps que les éléments de remplissage (6).

Fig. 1

Fig. 2

Fig. 3

Fig. 4